# EUROPÄISCHE PATENTSCHRIFT

(11) **EP 3 373 276 B1**
(45) Veröffentlichungstag und Bekanntmachung des Hinweises auf die Patenterteilung: **06.04.2022**
(21) Anmeldenummer: 18159782.4
(22) Anmeldetag: 02.03.2018
(51) Int. Cl.: G09B 27/08

(54) **DEKORATIONSGEGENSTAND MIT EINEM GLOBUS**
DECORATIVE ITEM WITH A GLOBE
OBJET DÉCORATIF POURVU D'UN GLOBE

(30) Priorität: 08.03.2017 DE 102017203829
(43) Veröffentlichungstag der Anmeldung: 12.09.2018
(73) Patentinhaber: Stoewahse, Ole, 518112 Dafen, Longgang, Shenzhen (CN)
(72) Erfinder: Stoewahse, Ole, 518112 Dafen, Longgang, Shenzhen (CN)
(74) Vertreter: Müller Verweyen

(56) Entgegenhaltungen:
- CN-U- 204 406 891
- DE-A1-102005 022 450
- DE-B4-102005 022 450
- DE-U1-202017 101 196

## Beschreibung

Die vorliegende Erfindung betrifft einen Dekorationsgegenstand mit den Merkmalen des Oberbegriffs von Anspruch 1.

Aus CN 203013120 (U) und CN 203520754 (U) sind beleuchtete Globen bekannt, welchen ein dekorativer Wert beigemessen werden kann. Beide Ausführungen umfassen den Globus, einen Standfuß, welcher mit Leuchtmitteln ausgestattet sein kann, und ein Leuchtmittel, welches an einem Fortsatz an einem Meridian angebracht ist. Diese Bauweise setzt das zusätzliche Anbringen oder Ausprägen des Fortsatzes an dem Meridian voraus, um daran die Leuchtmittel anbringen zu können. Das Vorhandensein des Fortsatzes am Meridian sowie eines Standfußes, führt zu einem größeren Bedarf an Bauraum gegenüber der Größe des Globus selbst; der Fortsatz am Meridian ist weiterhin ein zusätzliches Bauteil, was mit zusätzlichen Fertigungskosten und -aufwand verbunden ist. Ferner bildet das Leuchtmittel eine punktuelle Lichtquelle am Ende des Meridians, beziehungsweise an dessen Fortsatz.

CN 204 406 891 U offenbart einen Globus mit einer Basis, einem Träger und vier LEDs.

Aufgabe der Erfindung ist es, einen Dekorationsgegenstand mit einem Globus oder Ähnlichem bereitzustellen, der beleuchtet ist und ein höherwertiges optisches Erscheinungsbild aufweist.

Zur Lösung der Aufgabe wird erfindungsgemäß ein Dekorationsgegenstand mit den Merkmalen von Anspruch 1 vorgeschlagen. Vorteilhafte Aus- und Weiterbildungen sind den Unteransprüchen zu entnehmen.

Gemäß dem Grundgedanken der Erfindung wird vorgeschlagen, dass der Meridian wenigstens teilweise aus einem transparenten oder teiltransparenten Material gefertigt ist, wobei das erste Lichtaustrittselement optisch mit wenigstens einem ersten Leuchtmittel mittels wenigstens eines Lichtleiters gekoppelt ist, wobei der Meridian zwei Halbkreise aufweist, welche über Stege unter Bildung eines zwischen den Halbringen angeordneten Hohlraums miteinander verbunden sind, wobei das Leuchtmittel in dem Hohlraum angeordnet ist, und der Hohlraum auch durch das Lichtaustrittselement abgedeckt ist.

Die vorliegende Erfindung ermöglicht ein dekoratives Beleuchten eines Globus oder Ähnlichem und kann als indirekte oder direkte Raumbeleuchtung dienen. Der Begriff Globus ist hier nicht auf einen terrestrischen Globus beschränkt, sondern umfasst ebenfalls andere Himmelskörper, fiktive Globen oder auch nicht kugelförmige Körper, wie Zylinder, Würfel, Kegel oder sonstige Körper, die zu dekorativen, spielerischen oder schulischen Zwecken eingesetzt werden können und mit Bild-, Schrift- oder Kartenmaterial oder Ähnlichem versehen sein können.

Der erfindungsgemäße Einsatz von wenigstens einem ersten Lichtaustrittselement an dem Meridian, welches optisch an wenigstens ein erstes Leuchtmittel gekoppelt ist, ermöglicht eine gezielte und dekorative Beleuchtung des Globus. Ferner ist die erfindungsgemäße Beleuchtung des Globus platzsparender, da sie direkt über den notwendigen Meridian realisiert ist. Dies kann zudem Kostenvorteile in der Herstellung bringen. Dabei wird Nutzen aus der platz- und stromsparenden Bauweise moderner Leuchtmittel gezogen. Die Beleuchtung kann auch der indirekten oder direkten Beleuchtung eines Raumes dienen und muss daher nicht auf den Globus gerichtet sein. Es können ein oder mehrere erste Lichtaustrittselemente vorgesehen sein. Es können ebenso ein oder mehrere erste Leuchtmittel vorgesehen sein. Die Anzahl der ersten Lichtaustrittselemente muss jedoch nicht mit der Anzahl der ersten Leuchtmittel übereinstimmen. Erfindungsgemäß ist wenigstens ein erstes Lichtaustrittselement mit wenigstens einem ersten Leuchtmittel optisch mittels wenigstens eines Lichtleiters gekoppelt. Die Kopplung zwischen Leuchtmittel und Lichtaustrittselement mittels Lichtleitern eröffnet eine große Vielfalt an konstruktiven und funktionellen Vorteilen. Durch die Verwendung von Lichtleitern können das oder die Leuchtmittel an einer konstruktiv geeigneten Stelle im Meridian verbaut werden. Ein Leuchtmittel kann eine Vielzahl von Lichtleitern speisen oder lediglich einen einzelnen. Die Lichtleiter können als Lichtwellenleiter, planare Lichtwellenleiterstrukturen oder andere geeignete Strukturen, die Totalreflexion ermöglichen, ausgeführt sein. Als Lichtwellenleiter kommen hierbei bevorzugt Endlichtfasern und Seitenlichtfasern in Betracht. Durch eine geeignete Wahl und Ausprägung des Lichtleiters kann das Licht an gewünschten Stellen am Meridian ausgekoppelt werden und so die Lichtaustrittselemente speisen.

Es ist erfindungsgemäß , dass der Meridian wenigstens teilweise aus einem transparenten oder teiltransparenten Material gefertigt ist. Eine transparente Bauweise des Meridians kann weitere dekorative und funktionelle Vorteile erbringen. Ist der Meridian transparent oder teiltransparent, so können in dem Meridian leuchtende Strukturen angebracht sein, die eine dekorative oder funktionelle Wirkung aufweisen. Die Teiltransparenz kann zum Beispiel durch Sputtern des Meridians mit einer Metallschicht mit einer definierten Schichtdicke in einem ausgewiesenen Abschnitt der Oberfläche hergestellt sein. Dadurch kann das Licht in diesen ausgewiesenen Bereichen lediglich austreten und ein Einblick in das Innere des Meridians ist nicht möglich. Folglich sieht man leuchtende Strukturen im Meridian, nichtleuchtende jedoch nicht. Besonders dekorativ kann es sein, die Transparenz oder Teiltransparenz auch richtungsabhängig zu gestalten, was durch eine entsprechende Optik oder Oberfläche gewährleistet sein kann. So können leuchtende Strukturen nur aus bestimmten Richtungen wahrgenommen und die Lichtabstrahlcharakteristik gezielt beeinflusst werden.

Weiter ist der Meridian mit wenigstens einem ersten Lichtaustrittselement versehen wobei das erste Lichtaustrittselement optisch mit wenigstens einem ersten Leuchtmittel gekoppelt ist.

Es ist von Vorteil, wenn das Leuchtmittel als LED ausgebildet ist. LEDs sind besonders strom- und platzsparende Leuchtmittel und in verschiedenen Farben kostengünstig erhältlich. Die Verwendung von LEDs ermöglicht eine effektive Beleuchtung, welche sich sowohl mit Batterien, Akkus, oder Ähnlichem als auch mit einem geeigneten Netzteil betreiben lässt. Ferner kann eine Mehrzahl von kostengünstigen LEDs in einer Parallelschaltung verwendet werden, so dass eine Beleuchtung mit einer sehr hohen Lebensdauer verwirklicht werden kann. Weiterhin können LEDs verschiedener Ausführung, bevorzugt verschiedener Farbe, vorgesehen sein. Mittels einer geeigneten Steuerung kann dann ein gewünschtes Beleuchtungsschema, bevorzugt eine gewünschte Farbe oder Farbkomposition sowie eine gewünschte Beleuchtungsrichtung, eingestellt werden.

Durch die vorgeschlagene Lösung kann der Meridian sehr gleichmäßig zum Leuchten gebracht werden. Durch die Verwirklichung des ersten Leuchtmittels in Form von LEDs in einem Streifen kann der Meridian insbesondere entlang seiner gesamten Längserstreckung erleuchtet werden. Dabei können die LEDs in einem Streifen angeordnet und zusätzlich auch in einem Streifen fixiert und so an dem Meridian befestigt sein.

In einer bevorzugten Ausführungsform ist wenigstens ein erstes Lichtaustrittselement flächig ausgebildet. Die flächige Ausbildung der Lichtaustrittselemente bietet eine dekorative Möglichkeit der Beleuchtung. Das flächige Lichtaustrittselement kann homogen ausgeleuchtet sein oder Helligkeits- oder Farbgradienten bereitstellen. Das flächige Lichtaustrittselement kann derart ausgebildet sein, dass es Informationen, zum Beispiel in Form von Schrift, Bild, oder einer Angabe der Breitengrade, darstellt. Die flächige Ausbildung der Lichtaustrittselemente bietet die Grundlage für eine Vielzahl von Ausführungsformen. Die Lichtaustrittselemente und insbesondere deren Oberfläche können dazu eingerichtet sein, Licht ungerichtet zu streuen oder gezielt zu lenken. Die Lichtaustrittselemente können beispielsweise transparent, teiltransparent oder opak sein. Die Oberfläche der Lichtaustrittselemente kann eben sein oder eine strukturierte Oberfläche aufweisen. Der Meridian kann durch ein geeignetes Mehrkomponenten-Spritzgußverfahren derart ausgebildet sein, dass die Lichtaustrittselemente in den Meridian eingearbeitet sind. Die Lichtaustrittselemente können so eine beliebige Größe aufweisen. Auch der gesamte Meridian kann als Lichtaustrittselement ausgebildet sein. Alternativ kann der Meridian derart ausgebildet sein, dass die Lichtaustrittselemente aufnehmbar sind. Die Lichtaustrittselemente können in dieser Ausführungsform beispielsweise verklebt werden, und der Meridian kann aus einem beliebigen geeigneten Werkstoff bestehen.

Alternativ ist wenigstens ein erstes Lichtaustrittselement punktuell ausgebildet. Das punktuell ausgebildete Lichtaustrittselement kann verwendet werden, um bestimmte Teile des Globus gezielt zu beleuchten. Zum Beispiel kann der Äquator oder andere Breitengrade gezielt angezeigt werden. Andererseits ist auch die Verwendung einer Vielzahl von punktuellen Lichtaustrittselementen möglich, zum Beispiel in einer regelmäßigen Anordnung, was eine homogene Ausleuchtung erlaubt.

Es ist auch vorteilhaft, dass der Meridian wenigstens teilweise eine opake Oberfläche aufweist. Die Wahl eines opaken Materials oder einer opaken Oberfläche kann dekorativ ansprechend wirken. Wird der Meridian wenigstens teilweise aus einem opaken Material, zum Beispiel Milchglas oder einem geeigneten Kunststoff hergestellt oder mit einer opaken Oberfläche versehen, so kann der Meridian von innen erleuchtet werden, ohne einsehbar zu sein. Die Opazität der Oberfläche kann dabei auf verschiedenen Vorgängen, wie Lackieren, Beschichten, Strukturieren, chemisch Manipulieren oder ähnlichen Oberflächenbearbeitungsverfahren beruhen. Besonders dekorativ kann es sein, die Opazität auch richtungsabhängig zu gestalten, was durch eine entsprechende Optik oder Oberfläche gewährleistet sein kann. So können leuchtende Strukturen nur aus bestimmten Richtungen wahrgenommen und die Lichtabstrahlcharakteristik gezielt beeinflusst werden. Auch kann eine Kombination mit einer transparenten oder teiltransparenten Oberfläche ansprechend sein.

In einer bevorzugten Ausführungsform ist wenigstens ein erstes Lichtaustrittselement durch die Oberfläche wenigstens eines ersten Leuchtmittels gebildet. Ist das Lichtaustrittselement durch die Oberfläche des verwendeten Leuchtmittels gebildet, so ist das Lichtaustrittselement durch das verwendete Leuchtmittel selbst gebildet. Das Leuchtmittel kann in den Meridian eingelassen sein. In diesem Fall kann die Stromversorgung des Leuchtmittels an einer geeigneten Anschlussstelle des Meridians realisiert sein.

In einer vorteilhaften Ausbildung ist das Leuchtmittel als Flächen-LED ausgebildet. Flächen-LEDs, besonders bevorzugt OLEDs, bieten die Möglichkeit einer flächigen und stromsparenden direkten Beleuchtung. Flächen-LEDs lassen sich weiterhin an die Krümmung des Meridians anpassen.

Bevorzugt ist wenigstens ein erstes Lichtaustrittselement der dem Globus zugewandten Seite des Meridians zugeordnet. Diese Ausführungsform gewährleistet eine zuverlässige Beleuchtung des Globus und kann der indirekten Beleuchtung des Raumes dienen. Weiterhin kann die Beleuchtung des Globus auch dazu dienen, Licht in den Globus einzuspeisen.

In einer bevorzugten Ausführungsform sind die Lichtaustrittselemente derart ausgerichtet, Teile des Globus gezielt zu beleuchten. Der Globus kann auch gezielt beleuchtet werden, um bestimmte Regionen auf dem Globus hervorzuheben oder den Stand der Sonne und somit die Tageszeit zu repräsentieren. Bevorzugt kann das Licht auch gezielt in den Globus eingekoppelt werden. Weist der Globus eine wenigstens teilweise transparente Oberfläche auf, ist der Globus nicht nur äußerlich beleuchtet, sondern ferner kann der Eindruck erweckt werden, dass der Globus innerlich leuchtet. Durch das Einbringen von lichtleitenden und lichtstreuenden Strukturen kann die gezielte Beleuchtung des Globus genutzt werden, um bestimmte Regionen auf der Oberfläche des Globus hervorzuheben. Ebenso ist eine ungerichtete Streuung möglich, die den gesamten transparenten, teiltransparenten oder opaken Bereich des Globus erleuchtet. Auch das Aufbringen von lichtstreuenden Strukturen auf der Oberfläche des Globus ist möglich. Das Licht kann durch lichtleitende Strukturen auf der Oberfläche des Globus in den Globus eingekoppelt werden oder aber auch durch eine geeignete Lagerung des Globus am Meridian. Die Lager am Meridian und/oder die Achse des Globus können lichtleitende Strukturen bereitstellen, die das Licht in den Globus einkoppeln.

Es ist von Vorteil, dass der Dekorationsgegenstand auf einem Standfuß gehalten ist. Der Standfuß ermöglicht das Aufstellen des Globus. Der Standfuß kann weiterhin Stromquellen, vorzugsweise Netzteile, Batterien, Akkus oder Ähnliches beherbergen.

Es ist bevorzugt, dass in dem Standfuß wenigstens ein zweites Lichtaustrittselement vorgesehen ist. Der Standfuß kann ebenfalls als dekorativer oder funktioneller Bestandteil des Dekorationsgegenstandes über ein Lichtaustrittselement und somit eine Beleuchtung verfügen, welche den Globus oder den Raum direkt oder indirekt beleuchtet.

In einer bevorzugten Ausführungsform ist in dem Standfuß wenigstens ein zweites Leuchtmittel vorgesehen. Um den Standfuß lichttechnisch vom Meridian zu entkoppeln, kann im Standfuß ein zweites Leuchtmittel vorgesehen sein, welches dem zweiten Lichtaustrittselement zugeordnet ist.

Bevorzugt ist das erste Leuchtmittel mit dem zweiten Leuchtmittel identisch. Die Leuchtmittel, sowohl für den Meridian als auch für den Standfuß selbst, können im Standfuß angeordnet sein. Im Standfuß können sämtliche elektrische Komponenten untergebracht sein und das Licht kann mittels Lichtleiter zu den ersten und zweiten Lichtaustrittselementen transportiert werden. Diese Ausführungsform ermöglicht daher eine besonders kompakte oder filigrane Bauweise des Meridians.

Die Erfindung ist in verschiedenen bevorzugten Ausführungsformen mit den dazugehörigen Vorteilen beschrieben worden. Die beschriebenen bevorzugten Ausführungsformen können in beliebiger Kombination von einem Fachmann untereinander weitere Ausführungsformen bilden, die die Vorteile der einzelnen bevorzugten Ausführungsformen kombinieren.

Die Erfindung wird im Folgenden anhand bevorzugter Ausführungsformen unter Bezugnahme auf die beigefügten Figuren erläutert. Die Figuren zeigen im Einzelnen:
- Fig. 1: Dekorationsgegenstand mit einem Globus und einem Meridian gehalten auf einem Standfuß;
- Fig. 2: Schnittdarstellung des Meridians mit einem ersten Lichtaustrittselement und einem ersten Leuchtmittel;
- Fig. 3: Meridian in einer Schrägansicht; und
- Fig. 4: Schnittdarstellung des Meridians.

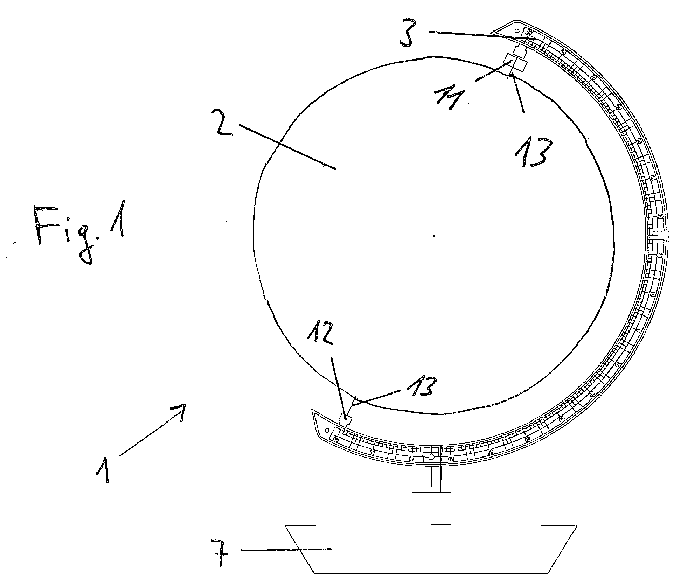

Die Fig. 1 zeigt einen Dekorationsgegenstand 1 mit einem Globus 2 und einem Meridian 3 gehalten auf einem Standfuß 7. Der Globus 2 ist hier kugelförmig ausgeführt und drehbar am Meridian 3 gehalten. Andere Objekte können jedoch ebenfalls durch den Meridian 3 gehalten werden. Der Standfuß 7 ist für die Erfindung nicht zwingend notwendig, wenn der Globus 2 mit dem Meridian 3 beispielsweise aufgehängt wird. Hier wird der Globus 2 an einer Achse 13 gehalten, die in einem ersten Lager 11 und einem zweiten Lager 12 aufgenommen wird. Die Lager 11,12 können die Drehung des Globus 2 erlauben oder den Globus 2 drehfest aufnehmen. Das erste Lager 11, das zweite Lager 12 und/oder die Achse 13 des Globus 2 können dazu eingerichtet sein, Licht in den Globus 2 einzukoppeln. Alternativ kann der Globus 2 wenigstens teilweise lichtleitend sein, um die Einkopplung von Licht zu ermöglichen. Im Inneren des Globus 2 oder auf dessen Oberfläche können lichtleitende oder lichtstreuende Strukturen vorgesehen sein, um die gezielte oder ungerichtete Beleuchtung von wenigstens Teilen der Oberfläche des Globus 2 zu ermöglichen. Der Globus 2 kann hohl oder wenigstens teilweise verfüllt sein. Je nach Einsatzzweck kommen für den Globus 2 und den Meridian 3 verschiedene Werkstoffe in Betracht. Spielen lichtleitende oder streuende Eigenschaften keine Rolle, kann auf Metall, Holz, Keramik, Kunststoff oder Ähnliches zurückgegriffen werden. Ist Lichtleitung oder Streuung vorgesehen, ist die Verwendung von Gläsern und ein- oder mehrkomponentigen Kunststoffen vorteilhaft. Transparente, teiltransparente oder opake Elemente können beispielsweise durch ein Mehrkomponenten-Spritzgußverfahren hergestellt und direkt in den Meridian 3 eingearbeitet sein. Ein anderweitiges Anbringen dieser Elemente ist jedoch auch denkbar.

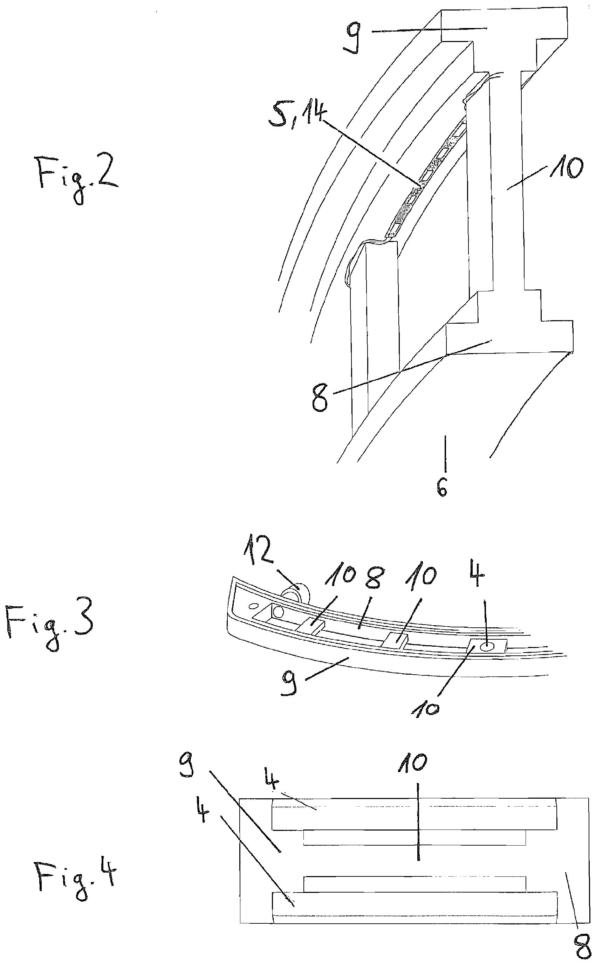

Die Fig. 2 zeigt einen Ausschnitt des Meridians 3 mit einem ersten Leuchtmittel 5, welches hier als Streifen mit SMD-LEDs 14 realisiert ist. Der Meridian 3 ist hier I-förmig ausgebildet und verfügt über einen ersten Halbring 8, welcher über eine dem Globus 2 zugewandte Seite 6 verfügt, und einen zweiten Halbring 9, wobei der erste Halbring 8 mit dem zweiten Halbring 9 mit wenigstens einem Steg 10 verbunden ist. In diesem Ausführungsbeispiel liegt der erste Halbring 8 näher am Globus 2 als der zweite Halbring 9. Andere Realisierungen sind auch denkbar; etwa dass beide Halbringe 8,9 den gleichen Abstand zum Globus 2 aufweisen oder dass lediglich ein Halbring besteht. Die dem Globus 2 zugewandte Seite 6 des ersten Halbrings 8 kann über erste Lichtaustrittselemente 4 verfügen. Der Meridian 3 ist wenigstens teilweise transparent, teiltransparent um Lichtleitung und/oder Streuung zu gewährleisten.

Die LEDs 14 sind hier in einem Streifen angeordnet bzw. fixiert und können an dem Meridian 3 in einer gleichmäßigen Verteilung mit identischen Abständen zueinander angeordnet und befestigt sein. Solche LEDs 14 in einem Streifen können kostengünstig in großen Mengen und insbesondere in großen Längen als vorgefertigte Baugruppen gekauft und zur Anordnung an dem Meridian individuell in eine vorbestimmte Länge vorgeschnitten und als solche an dem Meridian 3 befestigt werden. Die LEDs 14 können dabei auf dem Streifen fixiert sein, so dass sie durch eine einfache Befestigung des Streifens an dem Meridian 3 befestigt werden können. Dabei können die Abstände der LEDs 14 in dem Streifen bzw. Streifen mit LEDs 14 in einem bestimmten Abstand gewählt werden, so dass der Meridian 3 möglichst gleichmäßig ausgeleuchtet wird.

Die Fig. 3 zeigt den Meridian 3 in einer anderen Perspektive. Hierbei sind der erste Halbring 8 und der zweite Halbring 9 durch wenigstens einen Steg 10 verbunden. Das zweite Lager 12 ist am ersten Halbring 8 angebracht und für die Aufnahme der Achse 13 vorgesehen. In diesem Ausführungsbeispiel verfügt wenigstens ein Steg 10 über wenigstens ein erstes Lichtaustrittselement 4. In diesem Ausführungsbeispiel ist das Lichtaustrittselement 4 nicht auf den Globus 2 gerichtet. Eine geeignete Beschaffung der Oberfläche des Lichtaustrittselementes 4 lässt dennoch eine gezielte Beleuchtung des Globus 2 zu.

Die Fig. 4 zeigt eine Schnittdarstellung des Meridians 3. In dieser Ausführung ist der Meridian 3 auch I-förmig ausgebildet und verfügt über einen Steg 10, welcher den ersten Halbring 8 und den zweiten Halbring 9 miteinander verbindet. Der Meridian 3 dient hier als Träger des ersten Lichtaustrittselements 4, welche beispielsweise auf den Meridian 3 geklebt ist. Das dem ersten Lichtaustrittselement 4 zugeordnete erste Leuchtmittel 5 kann beispielsweise wie in Fig. 2 eingerichtet sein und somit für die Beleuchtung in Richtung des Globus 2 eingerichtet sein. Alternativ kann das erste Leuchtmittel 5 an dem Steg 10 angeordnet sein und beispielsweise den Meridian 3 senkrecht zur Radialrichtung beleuchten. Die Halbringe 8 und 9 sind mit den Stegen 10 gezielt so ausgebildet, dass zwischen den Halbringen 8 und 9 ein Hohlraum geschaffen wird, in dem das oder die ersten Leuchtmittel 5 angeordnet werden. Der Hohlraum wird dann mit den darin angeordneten ersten Leuchtmitteln 5 durch die zumindest teiltransparenten Lichtaustrittselemente 4 seitlich abgedeckt, so dass das von den ersten Leuchtmitteln 5 abgegebene Licht durch die Lichtaustrittselemente 4 austritt, und der Meridian 3 im Bereich der Lichtaustrittselemente 4 leuchtet.

## Patentansprüche

1. Dekorationsgegenstand (1) mit einem Globus (2), welcher an einem Meridian (3) gelagert ist, wobei der Meridian (3) mit wenigstens einem ersten Lichtaustrittselement (4) versehen ist, **dadurch gekennzeichnet, dass** der Meridian (3) wenigstens teilweise aus einem transparenten oder teiltransparenten Material gefertigt ist, wobei das erste Lichtaustrittselement (4) optisch mit wenigstens einem ersten Leuchtmittel (5) mittels wenigstens eines Lichtleiters gekoppelt ist, wobei der Meridian (3) zwei Halbringe (8,9) aufweist, welche über Stege (10) unter Bildung eines zwischen den Halbringen (8,9) angeordneten Hohlraumes miteinander verbunden sind, wobei das Leuchtmittel (5) in dem Hohlraum angeordnet ist, und der Hohlraum durch das Lichtaustrittselement (4) abgedeckt ist.

2. Dekorationsgegenstand (1) nach Anspruch 1, **dadurch gekennzeichnet, dass** wenigstens ein erstes Lichtaustrittselement (4) flächig ausgebildet ist.

3. Dekorationsgegenstand (1) nach Anspruch 1, **dadurch gekennzeichnet, dass** wenigstens ein erstes Lichtaustrittselement (4) punktuell ausgebildet ist.

4. Dekorationsgegenstand (1) nach einem der vorangegangenen Ansprüche, **dadurch gekennzeichnet, dass** der Meridian (3) wenigstens teilweise eine opake Oberfläche aufweist.

5. Dekorationsgegenstand (1) nach einem der vorangegangenen Ansprüche, **dadurch gekennzeichnet, dass** wenigstens ein erstes Lichtaustrittselement (4) durch die Oberfläche von wenigstens einem ersten Leuchtmittel (5) gebildet ist.

6. Dekorationsgegenstand (1) nach einem der vorangegangenen Ansprüche, **dadurch gekennzeichnet, dass** wenigstens ein erstes Leuchtmittel (5) als Flächen-LED ausgebildet ist.

7. Dekorationsgegenstand (1) nach einem der vorangegangenen Ansprüche, **dadurch gekennzeichnet, dass** wenigstens ein erstes Lichtaustrittselement (4) der dem Globus (2) zugewandten Seite (6) des Meridians (3) zugeordnet ist.

8. Dekorationsgegenstand (1) nach einem der vorangegangenen Ansprüche, **dadurch gekennzeichnet, dass** wenigstens ein erstes Lichtaustrittselement (4) derart ausgerichtet ist, um Teile des Globus (2) gezielt zu beleuchten.

9. Dekorationsgegenstand (1) nach einem der vorangegangenen Ansprüche, **dadurch gekennzeichnet, dass** Licht gezielt in den Globus (2) eingekoppelt wird.

10. Dekorationsgegenstand (1) nach einem der vorangegangenen Ansprüche, **dadurch gekennzeichnet, dass** der Dekorationsgegenstand (1) auf einem Standfuß (7) gehalten ist.

11. Dekorationsgegenstand (1) nach Anspruch 10, **dadurch gekennzeichnet, dass** in dem Standfuß (7) wenigstens ein zweites Lichtaustrittselement vorgesehen ist.

12. Dekorationsgegenstand (1) nach Anspruch 10 oder 11, **dadurch gekennzeichnet, dass** in dem Standfuß (7) wenigstens ein zweites Leuchtmittel vorgesehen ist.

13. Dekorationsgegenstand (1) nach Anspruch 12, **dadurch gekennzeichnet, dass** das erste Leuchtmittel (5) mit dem zweiten Leuchtmittel identisch ist.

## Claims

1. Decorative article (1) comprising a globe (2) mounted on a meridian (3), wherein the meridian (3) is provided with at least one first light outlet element (4), **characterized in that** the meridian (3) is produced at least in part from a transparent or partially transparent material, wherein the first light outlet element (4) is optically coupled to at least one first light means (5) by means of at least one light guide, wherein the meridian (3) comprises two half-rings (8, 9) which are connected to each other via sections (10) forming a cavity arranged between the half-rings (8, 9), wherein the light means (5) is arranged in the cavity, and the cavity is covered by the light outlet element (4).

2. Decorative article (1) according to claim 1, **characterized in that** at least a first light outlet element (4) is formed in a planar manner.

3. Decorative article (1) according to claim 1, **characterized in that** at least one first light outlet element (4) is formed punctiform.

4. Decorative article (1) according to any one of the preceding claims, **characterized in that** the meridian (3) comprises at least partially an opaque surface.

5. Decorative article (1) according to any one of the preceding claims, **characterized in that** at least one first light outlet element (4) is formed by the surface of at least one first light means (5).

6. Decorative article (1) according to any one of the preceding claims, **characterized in that** at least one first light means (5) is formed as a planar LED.

7. Decorative article (1) according to any one of the preceding claims, **characterized in that** at least one first light outlet element (4) is assigned to the side (6) of the meridian (3) facing the globe (2).

8. Decorative article (1) according to any one of the preceding claims, **characterized in that** at least one first light outlet element (4) is oriented so as to illuminate parts of the globe (2) in a targeted manner.

9. Decorative article (1) according to any one of the preceding claims, **characterized in that** light is coupled into the globe (2) in a targeted manner.

10. Decorative article (1) according to any one of the preceding claims, **characterized in that** the decorative article (1) is held on a stand (7).

11. Decorative article (1) according to claim 10, **characterized in that** at least one second light outlet element is provided in the stand (7).

12. Decorative article (1) according to claim 10 or 11, **characterized in that** at least a second light means is provided in the stand (7).

13. Decorative article (1) according to claim 12, **characterized in that** the first light means (5) is identical to the second light means.

## Revendications

1. Objet décoratif (1) comportant un globe (2) lequel est monté au niveau d'un méridien (3), le méridien (3) étant pourvu d'au moins un premier élément de sortie de lumière (4), **caractérisé en ce que** le méridien (3) est réalisé, au moins en partie, en un matériau transparent ou partiellement transparent, le premier élément de sortie de lumière (4) étant couplé optiquement, par l'intermédiaire d'au moins une fibre optique, avec au moins un premier moyen d'éclairage (5), le méridien (3) comportant deux demi-anneaux (8, 9) qui sont reliés par des ailettes (10) de manière à former une cavité laquelle est disposée entre les demi-anneaux (8, 9), le moyen d'éclairage (5) étant disposé dans ladite cavité, et ladite cavité étant recouverte par l'élément de sortie de lumière (4).

2. Objet décoratif (1) selon la revendication 1, caractérisé ce qu'au moins un premier élément de sortie de lumière (4) est réalisé de manière plane.

3. Objet décoratif (1) selon la revendication 1, caractérisé ce qu'au moins un premier élément de sortie de lumière (4) est réalisé sous forme d'un point.

4. Objet décoratif (1) selon l'une des revendications précédentes, **caractérisé en ce que** le méridien (3) présente, au moins en partie, une surface opaque.

5. Objet décoratif (1) selon l'une des revendications précédentes, **caractérisé en ce qu'**au moins un premier élément de sortie de lumière (4) est formé par la surface d'au moins un premier moyen d'éclairage (5).

6. Objet décoratif (1) selon l'une des revendications précédentes, **caractérisé en ce qu'**au moins un premier moyen d'éclairage (5) est réalisé sous forme d'une LED plane.

7. Objet décoratif (1) selon l'une des revendications précédentes, **caractérisé en ce qu'**au moins un premier élément de sortie de lumière (4) est associé au côté (6) du méridien (3) qui fait face au globe (2).

8. Objet décoratif (1) selon l'une des revendications précédentes, **caractérisé en ce qu'**au moins un premier élément de sortie de lumière (4) est orienté de manière à ce qu'il effectue un éclairage ciblé de certaines parties du globe (2).

9. Objet décoratif (1) selon l'une des revendications précédentes, **caractérisé en ce que** l'on injecte, de manière ciblée, de la lumière dans le globe (2).

10. Objet décoratif (1) selon l'une des revendications précédentes, **caractérisé en ce que** l'objet décoratif (1) est maintenu sur un pied de support (7).

11. Objet décoratif (1) selon la revendication 10, **caractérisé en ce qu'**au moins un deuxième élément de sortie de lumière est prévu dans le pied de support (7).

12. Objet décoratif (1) selon les revendications 10 ou 11, **caractérisé en ce qu'**au moins un deuxième moyen d'éclairage est prévu dans le pied de support (7).

13. Objet décoratif (1) selon la revendication 12, **caractérisé en ce que** le premier moyen d'éclairage (5) est identique au deuxième moyen d'éclairage.
